# FASCICULE DE BREVET EUROPEEN

(11) **EP 0 860 778 B1**
(45) Date de publication et mention de la délivrance du brevet: **14.05.2003**
(21) Numéro de dépôt: 98400331.9
(22) Date de dépôt: 12.02.1998
(51) Int. Cl.: G06F 11/267

(54) **Dispositif et procédé de détection d'erreurs sur un circuit intégré comportant un port parallèle série**
Vorrichtung und Verfahren zur Fehlererkennung in einer integrierten Schaltung mit einer parallelen-seriellen Anschlussstelle
Device and method for error detection in an integrated circuit with a parallel-serial port

(30) Priorité: 19.02.1997 FR 9701944
(43) Date de publication de la demande: 26.08.1998
(73) Titulaire: BULL S.A., 78434 Louveciennes Cedex (FR)
(72) Inventeur: Autechaud, Jean-François, 75004 Paris (FR); Dionet, Christophe, 94200 Ivry sur Seine (FR)
(74) Mandataire: Denis, Hervé

(56) Documents cités:
- EP-A- 0 280 013
- PATENT ABSTRACTS OF JAPAN vol. 010, no. 223 (P-483), 5 août 1986 & JP 61 059547 A (YOKOGAWA HOKUSHIN ELECTRIC CORP), 27 mars 1986,
- PATENT ABSTRACTS OF JAPAN vol. 008, no. 269 (P-319), 8 décembre 1984 & JP 59 136843 A (YOKOGAWA HOKUSHIN DENKI KK), 6 août 1984,

## Description

La présente invention concerne un dispositif et procédé de détection d'erreurs sur un circuit intégré comportant un port parallèle série et série parallèle.

Il est connu des circuits intégrés comportant des interfaces entre un bus parallèle et un bus série, mais en général, ceux-ci ne comportent pas de dispositif et procédé de détection et recouvrement d'erreurs, car on part du principe que la communication ne comporte pas d'erreurs mettant en cause la liaison série, ou si celle-ci en comporte, les détections d'erreurs et recouvrement d'erreurs sont faites dans une couche plus élevée (perte de calibration) au niveau du logiciel (Software).

Dans l'invention, la liaison série est une liaison série à 1 Giga baud, et si l'on admet que deux ports de même type communiquent entre eux par la liaison série, et permettent à des machines, dont le taux d'erreurs est de l'ordre de 10⁻¹⁷ par corruption de messages et perte de calibration et/ou incohérence de protocole, de communiquer entre elles, on constate compte-tenu du débit de la liaison série et du taux d'erreurs de la machine, que ce taux d'erreurs qui semble faible peut générer tous les deux jours une erreur importante et un dysfonctionnement de la machine.

Un premier but de l'invention est donc de fournir une interface de liaison série parallèle dans les deux sens pour un circuit intégré qui permet la détection d'erreurs et le contrôle du bon fonctionnement de la communication.

Ce but est atteint par le fait que le dispositif de détection d'erreurs avec auto-test intégré, est sur un circuit intégré comportant une fonction de commandes de liaison série pour constituer un port d'entrée-sortie de communication haut débit entre un bus parallèle et une liaison série, ledit circuit intégré comprenant un circuit sérialiseur en sortie et un circuit désérialiseur en entrée, est caractérisé en ce qu'un tampon (buffer) d'insertion à chacune de ces sorties reliées à une fonction OU exclusif à deux entrées, et dont chaque deuxième entrée reçoit une information à transmettre pour constituer avec l'information d'insertion provenant du tampon d'insertion, une information de substitution, un tampon (buffer) supplémentaire d'activation permettant la comparaison de la séquence fournie en sortie du OU exclusif avec une séquence stockée dans te tampon (buffer) supplémentaire d'activation pour valider l'émission de la séquence de substitution.

Selon une autre particularité, le tampon (buffer) supplémentaire comporte un bit de validité et la séquence à comparer.

Selon une autre particularité, la séquence à comparer peut être un jeton, un CRC, des données, des fins de trame, un message neutre ou caractère nul (idle).

Selon une autre particularité, le port comporte une liaison série rebouclant la sortie du sérialisateur sur l'entrée du désérialisateur, ladite liaison série étant validée par une entrée de commandes de rebouclage fournie par un registre de contrôle.

Selon une autre particularité, le port comporte en sortie du désérialisateur un tampon (buffer) d'historique stockant soit des caractères de contrôle tels que les débuts de trame (frame), les fins de trame, des jetons, soit tous les caractères non neutres (non idle).

Selon une autre particularité, les caractères mémorisés dans le tampon (buffer) d'historique sont utilisés par le circuit intégré pour déterminer la cause d'une erreur détectée.

Selon une autre particularité, le port comporte au moins un tampon (buffer) (TDBUF) de données à transmettre provenant du bus parallèle, ou de données (RDBUF) à recevoir, et entre le tampon (buffer) d'entrée (TDBUF) et le circuit sérialiseur de sortie, ou respectivement entre le tampon (buffer) de sortie (RDBUF) et le circuit désérialiseur d'entrée, respectivement pour la partie transmission un circuit de génération de code CRC, ou pour la partie réception un circuit de contrôle de code CRC.

Selon une autre particularité, le circuit sérialiseur et désérialiseur travaillent à 1 Giga baud, vitesse de la liaison série.

Selon une autre particularité, le circuit de génération de CRC délivre un mot de 16 bits par utilisation d'un algorithme parallèle pour calculer le CRC après le décalage correspondant au contrôle d'un nonet.

Selon une autre particularité, les tampons (buffers) de données de transmission ou de réception (TDBUF, RDBUF) fonctionnent avec l'horloge système ayant une fréquence correspondant à celle du bus interne du circuit intégré.

Selon une autre particularité, un circuit codeur 9/12 en transmission série est couplé au sérialiseur, et un circuit décodeur 9/12 en réception est couplé au désérialiseur pour transformer un caractère normal de 9 bits, et un caractère de contrôle en code à 12 bits permettant à la réception une extraction du signal d'horloge et une composante continue nulle sur la transmission.

Un autre but de l'invention est de proposer un procédé de détection d'erreurs.

Ce but est atteint par le fait que le procédé de détection d'erreurs utilisant le dispositif de la revendication 1 sur un port de communication série parallèle haut débit et un circuit CRC comportant un mécanisme d'injection d'erreurs, est caractérisé en ce qu'il comporte
une étape d'envoi au port d'une information à transmettre ;
une étape de calcul du CRC de l'information à transmettre et de mémorisation du CRC correspondant à l'information à transmettre ;
une étape de génération d'une information erronée par validation du mécanisme d'injection d'erreurs et une étape de transmission de l'information erronée à un circuit intégré équipé du même type de port ;
une étape de détection d'erreurs de données par le circuit de contrôle CRC du port de réception ;
une étape d'envoi d'un message d'interruption au circuit intégré du port de transmission ;
une étape de lecture par un microprocesseur relié au bus parallèle du port de transmission de la valeur calculée par le circuit CRC du port de réception ;
une étape de comparaison entre la valeur mémorisée et la valeur lue.

Selon une autre particularité, le procédé comporte une étape de rebouclage du circuit sérialiseur de transmission sur le circuit désérialiseur de réception du même port du circuit intégré.

Selon une autre particularité, le mécanisme d'injection d'erreurs comprend :
une étape de stockage dans le tampon (buffer) d'insertion des informations d'injection à combiner avec les informations transmises pour générer l'erreur ;
une étape de chargement du tampon (buffer) d'activation du mécanisme d'injection comportant une séquence d'un ou deux caractères ;
une étape de substitution des informations de substitution résultant de la combinaison des informations transmises avec celles d'injection dès que les informations transmises correspondent à celles du tampon (buffer) d'activation.

Selon une autre particularité, la longueur de la séquence de substitution est limitée à 8 caractères.

D'autres particularités et avantages de la présente invention apparaîtront plus clairement à la lecture de la description ci-après faite en référence aux dessins annexés illustratifs d'un mode non limitatif de réalisation de l'invention dans lesquels :
la figure 1 représente la partie du circuit intégré constituant le port d'interface série parallèle ;
la figure 2A représente le schéma général d'un circuit intégré incorporant un tel port d'interface ;
la figure 2B représente le schéma d'architecture d'une machine utilisant un tel circuit intégré ;
la figure 3 représente le contenu du tampon (buffer) d'historique HB à partir des informations transmises o-s et des caractères du tampon d'insertion I-sb.
la figure 4A représente un circuit de substitution de caractères d'erreurs ;
la figure 4B représente un circuit d'historique ;
la figure 5 représente le mécanisme de calcul du code de contrôle redondant cyclique (CRC).

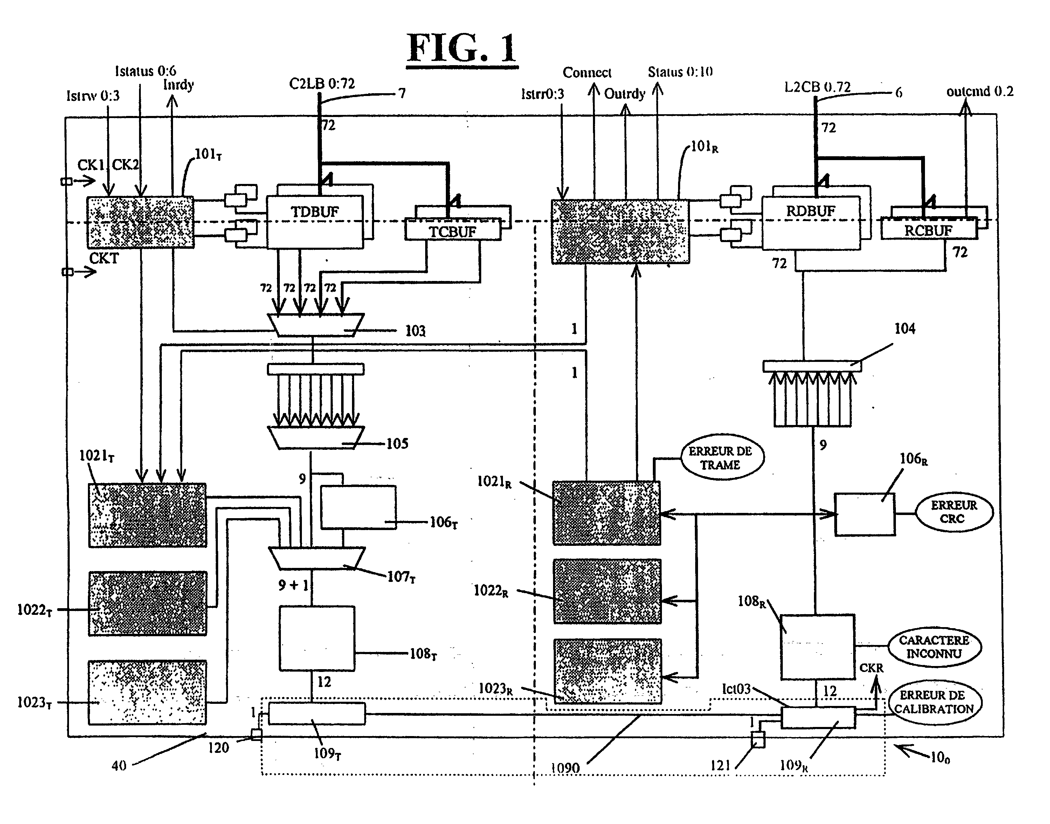

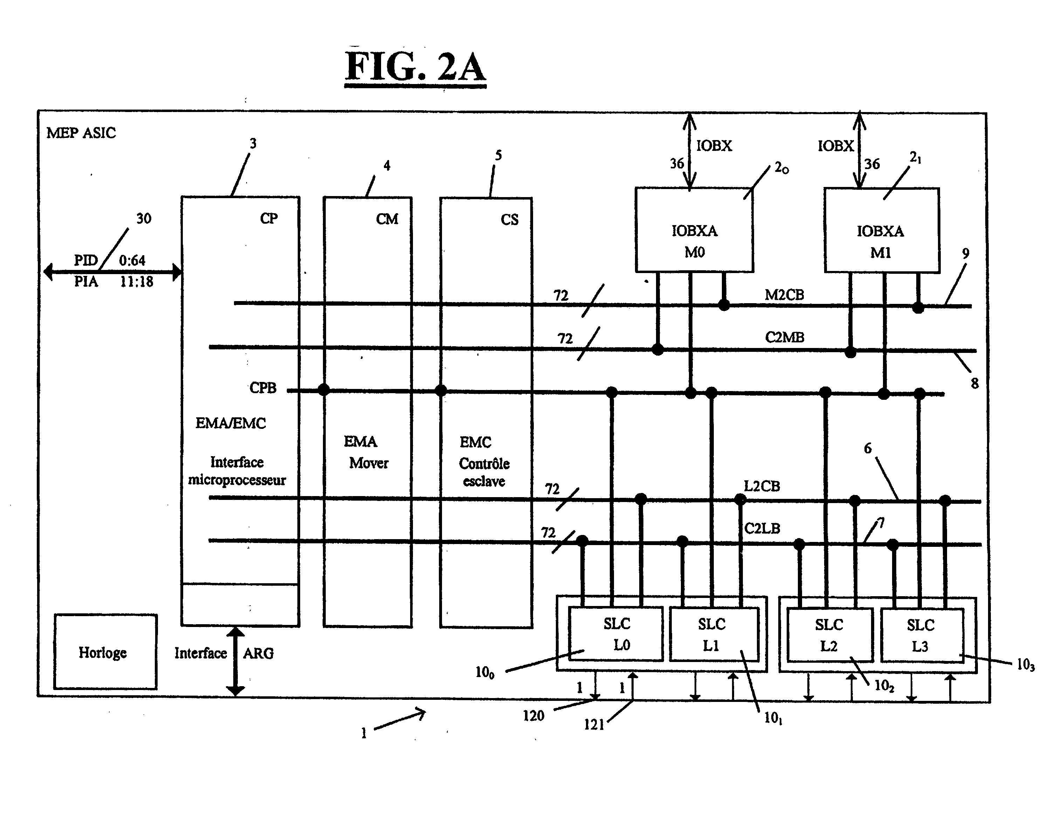

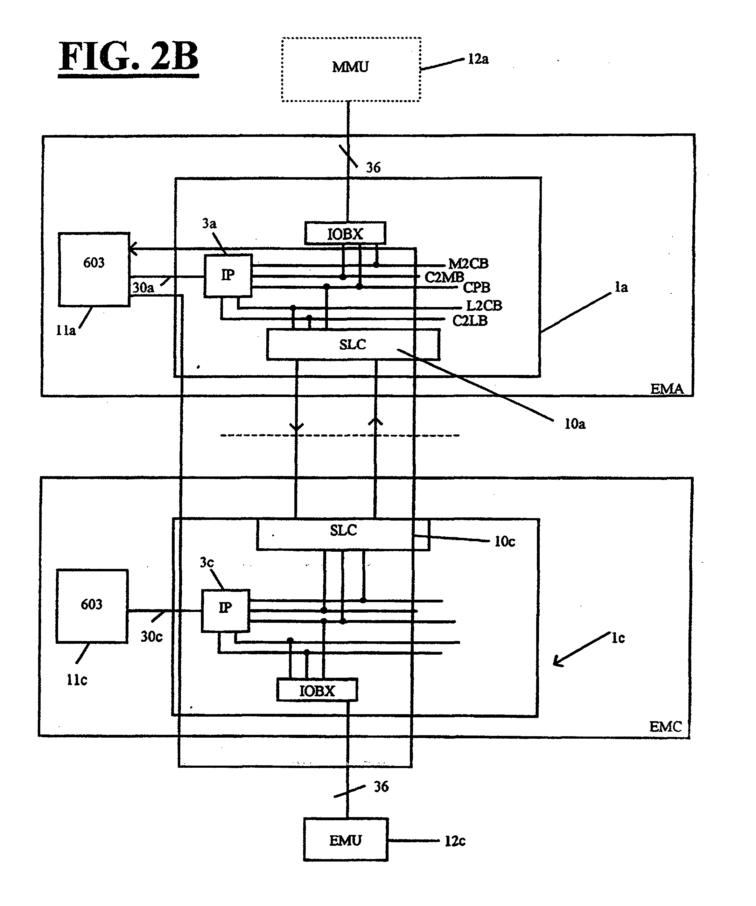

Le port 10₀ appelé bloc de contrôle de la liaison série SLC (Serial Link Control) est incorporé dans un circuit intégré du type de celui par exemple représenté à la figure 2A. Ce circuit intégré (1) comporte une pluralité de port 10⁰, 10¹, 10², 10³ du même type que celui de la figure 1, lesquels communiquent à une fréquence système par exemple de 33 MHz avec deux bus parallèles de données de 72 bits, L2CB en entrée (6) et C2LB en sortie (7). Ces bus parallèles communiquent avec des circuits logiques réalisant pour le circuit (3) une fonctionnalité d'interface avec un microprocesseur (11) par l'intermédiaire d'un bus 64 bits (30), pour le circuit (4) une fonctionnalité de déplacement (MOVER) pour le circuit intégré lorsque celui-ci est incorporé dans une carte de type données, et pour le circuit (5) une fonctionnalité de contrôleur mémoire (Slave Control). Ces circuits (3, 4, 5) communiquent également par deux bus de données de 72 bits M2CB (9), C2MB (8), avec deux interfaces d'entrée sortie IOBX 2⁰, 2¹, qui permettent la communication avec des bus 36 bits provenant soit d'une mémoire (12a, fig. 2B) principale MMU, soit d'une mémoire (12c) d'extension EMU comme représenté à la figure 2B. Un bus de commande CPB permet au microprocesseur (11) communiquant avec le circuit intégré (1) d'accéder aux registres de contrôle et de statut (Status) des différents circuits (3, 4, 5, 2, 10) présent dans le circuit intégré. Ce circuit intégré (1) est utilisé dans une machine comportant une mémoire principale (12a), une mémoire étendue (12c) partageable par plusieurs systèmes. Un premier circuit intégré (1a) maître selon l'invention communique par le bus (30) avec un premier processeur (11a) et par l'interface IOBX avec la mémoire (12a), tandis qu'un deuxième circuit intégré (1c) esclave communique d'une part, avec le premier circuit maître (1a), et d'autre part par le bus (30a) avec un deuxième processeur (11c) et avec une mémoire étendue (12c). Le port (10a) de transmission parallèle série et de réception série parallèle du circuit (1a), comporte pour la partie transmission une paire de tampons de données (buffers) TDBUF de 8 x 72 bits reliés au bus de transmission C2LB. Un multiplexeur (103) permet de sélectionner l'un des deux tampons (buffers) TDBUF ou le tampon (buffer) TCBUF de signaux de commande qui contient l'en-tête. Les informations sortant du multiplexeur (103) sont envoyées sur un circuit (105) de désassemblage, lequel génère une succession de caractères de 9 bits constituant les caractères à transmettre. Ce circuit de désassemblage (105) est également relié à un circuit de génération de caractère de contrôle cyclique redondant CRC (106_{T}). Un second multiplexeur (107) permet de sélectionner les signaux transmis à un codeur (108_{T}) permettant le codage 9/12 des informations transmises en associant au caractère normal formé d'un nonet, un caractère de contrôle et, en complétant à 12 bits par un caractère de start et un caractère de stop. Le codage 9/12 est effectué pour que le signal transmis sur la ligne série ne comporte pas de composante continue (DC Balance). Le multiplexeur (107) reçoit des signaux provenant d'une machine (1021T) d'état de transmission du lien série qui contient au moins un compteur à 2 bits de jetons, dont chaque bit représentant un jeton indique la disponibilité du tampon associé. Le multiplexeur (107) reçoit des signaux provenant d'une machine d'état de substitution (1022_{T}), et des signaux provenant d'une machine d'état d'initialisation du port (1023_{T}). La sortie du codeur (108_{T}) est reliée à un circuit sérialiseur (109_{T}) dont la sortie constitue une ligne série (120) qui émet des signaux à une vitesse de 1 Giga bits/sec.

Le sérialiseur est relié par une liaison série de rebouclage (1090) à un désérialiseur (109_{R}) du circuit de réception du port (100). Cette liaison (1090) est validée sur le désérialiseur (109_{R}) par un signal (Ict03).

Le multiplexeur (107) reçoit également les signaux d'une machine d'état de la transmission. Chaque tampon (buffer) de transmission est contrôlé par une machine d'état de gestion des tampons (buffers) de transmission (101_{T}) laquelle reçoit Istatus 0 : 6, Istrw 0 : 3, et émet le signal Inrdy.

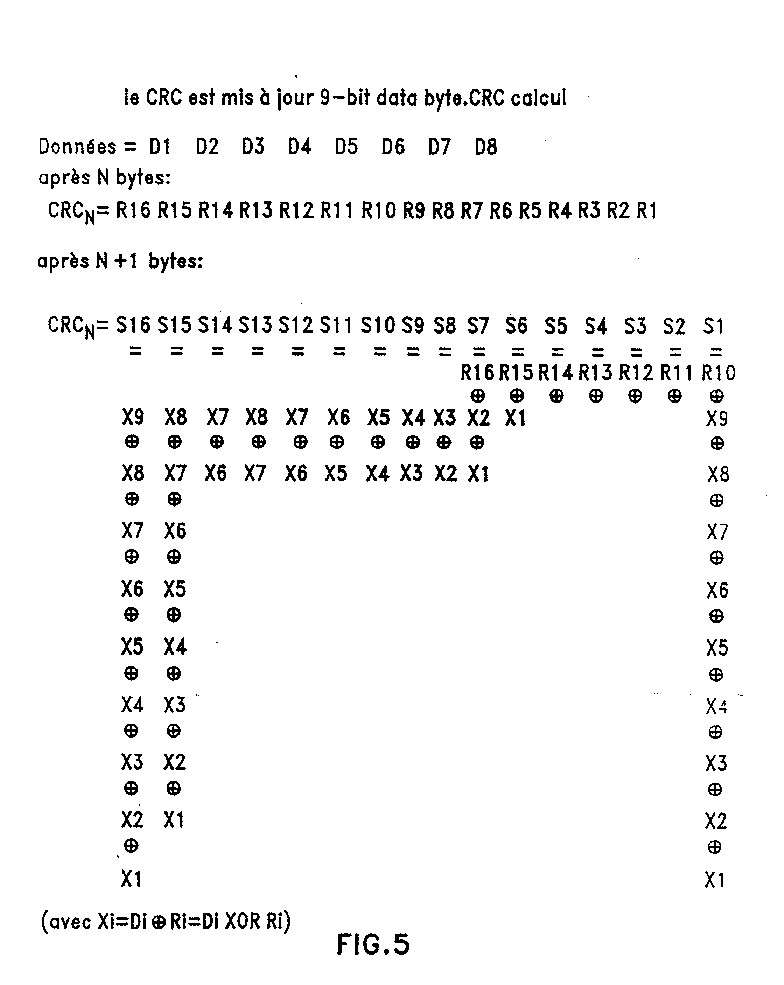

Le désérialiseur (109_{R}) est relié à un décodeur (108_{R}) fonctionnant sur le même principe que le codeur (108_{T}) du circuit de transmission. Ce décodeur du circuit de réception envoie les 9 bits de chaque donnée sur un circuit (104) d'assemblage des données, pour transformer en message (1 x 72, 3 x 72, 8 x 72, 9 x 72) bits les données reçues en série, qui sont chargées dans une paire de tampons (buffers) de réception de données (RDBUF). Cette paire de tampons (buffers) de réception de données (RDBUF) est contrôlée par une machine de gestion des tampons (buffers) de réception (101_{R}), et est associée à une paire de tampons de réception de commande (RCBUF) qui contiennent les en-têtes des messages. La sortie du décodeur (108_{R}) du circuit de réception est branchée à un circuit de code de vérification de messages élaborant un caractère de contrôle cyclique CRC (106_{T}) pour comparaison. Le CRC_{N+1} est mis à jour après chaque réception de 9 bits de données en calculant sur 16 bits le CRC par un algorithme de permutation cyclique représenté fig. 5 sur les valeurs calculées Xᵢ à partir des données reçues Dᵢ et des valeurs Rᵢ des bits du CRC_{N} précédent selon la formule donnée fig. 5. Les informations transmises par ce décodeur (108R) sont également transmises d'une part, à une machine d'état constituant un tampon (buffer) d'historique (1022_{R}), et d'autre part, à une machine d'état du port de réception (1021_{R}), et enfin à une machine d'état d'initialisation (1023_{R}) du port.

La machine (101_{R}) d'état de gestion du tampon (buffer) de réception émet trois signaux (Connect, Outrdy, Status 0 : 10), et reçoit en entrée sur trois lignes les informations (Istrr 0 : 3).

Le signal (Outrdy) indique que la sortie est prête, ce signal indique qu'il y a un message complet en attente de lecture. Le signal Status indique le statut des sorties : interruptions ou non, opérations indivisibles ou non, accès mémoire/registres d'accès, local/éloigné ou ISCON/non ISCON, source micro/déplacement (MOVER) - esclaves (SLAVE), réponses différées où non, dernier message ou non, erreur de données ou non, accès hors mémoire ou non, message insignifiant ou non. La sortie Connect indique que le port SLC (10⁰) est déconnecté quand cette sortie est désactivée.

Les entrées Istrr permettent la lecture des ports de réception en ordre FIFO, et la commande qui lit le dernier double mot d'un message engendre la génération d'un caractère de contrôle de flux (jeton) associé avec le tampon (buffer) qui devient ainsi libre. Ce caractère de contrôle de flux est transmis de la machine d'état de gestion des tampons (buffers) de réception (101_{R}) à la machine d'état de gestion de la transmission, et à travers celle-ci au multiplexeur (107) de façon à transmettre cette information au port (10c) d'entrée de la carte (1c) associée dans la liaison série au port (109_{R}) de réception dont on vient de lire les tampons (buffers) de réception (RDBUF). La machine d'état de gestion des tampons (buffers) de transmission (101_{T}) comporte deux entrées Istatus et Istrw, et une sortie Inrdy. Cette sortie Inrdy indique qu'il y a un tampon (buffer) de transmission (TDBUF) libre en attente pour être écrit. Les lignes Istatus permettent de préciser les types de message à écrire, et de déterminer en fonction de la valeur des deux premiers bits de status les significations suivantes : 00 ne sont pas utilisés, 01 il s'agit seulement de données, 10 il s'agit d'un entête (header), 11 il s'agit d'un entête et de données. Le troisième bit Istatus, indique s'il s'agit du dernier message ou non. Le quatrième bit, qu'il s'agit d'une erreur de données ou non ; et le cinquième bit si on a un accès extérieur à la mémoire ou non.

Enfin le signal Istrw permet d'écrire les tampons (buffers) de transmissions (TDBUF) en ordre FIFO. Le signal Istrw qui écrit le dernier double mot d'un message initialise la transmission du message dès qu'un tampon (buffer) de réception (RDBUF) éloigné (par exemple du port 10c) est déclaré libre par un port de réception (109_{R}) relié à la liaison série (120).

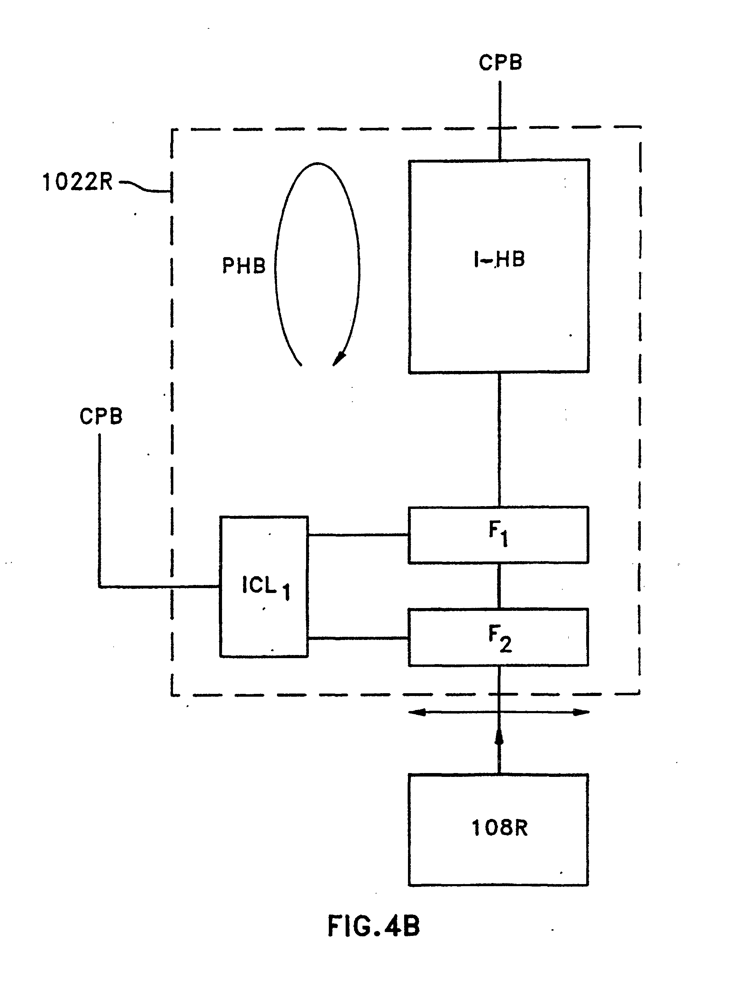

Le tampon (buffer) d'historique (I-HB) a 16 entrées et contient soit les 16 derniers caractères qui viennent de la liaison série par le décodeur (108R), ou les 16 derniers caractères de contrôle en excluant les caractères nuls. Quand une erreur s'est produite sur le lien série, l'écriture dans le tampon (buffer) d'historique peut être inhibée par une commande spécifique et la lecture du tampon s'effectue grâce à un pointeur (PHB) qui permet un balayage cyclique du tampon commandé par le microprocesseur (11). La commande du tampon (buffer) d'historique est effectuée par un registre de commandes (ICL1) (Fig. 4B) relié au bus de commande CPB.

Le tampon d'historique IHB est accessible au microprocesseur (11a, 11c) par le bus de commande de CPB. Le registre de commande ICL1 est relié à 2 filtres (F1, F2). Le premier F1, lorsqu'il est activé par ICL1 ne laisse passer que les caractères de contrôle, et lorsqu'il n'est pas activé, est transparent. Le deuxième filtre F2 laisse passer tous les caractères non nuls.

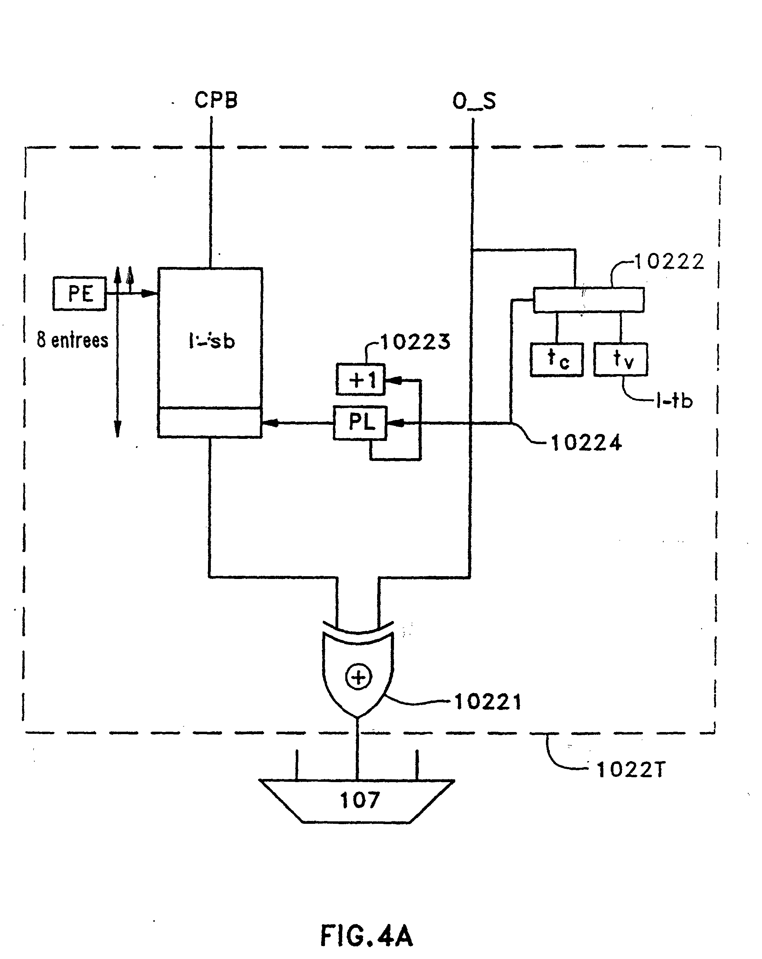

La machine d'état de substitution (1022_{T}) (Fig. 4A) comporte un tampon (buffer) de substitution (I-sb) qui a huit entrées et son contenu est combiné dans un OU exclusif (10221) avec le flot sortant (o-s, Out going stream) des caractères sur une longueur de 7 caractères.

La substitution commence avec le dernier caractère d'une séquence d'activation. Le caractère du flot sortant (o-s) correspondant au dernier caractère valide du tampon (buffer) de transmission, TDBUF, est combiné dans une porte OU exclusif avec le premier caractère du tampon (buffer) de substitution (I-sb).

En fonctionnement sans substitution, le pointeur de lecture PL du tampon de substitution (I-sb) adresse le premier caractère du tampon de substitution (I-sb). Ce caractère qui est nul, en se combinant dans le OU exclusif (10221) avec les caractères du flot (o-s) ne modifie pas ces derniers, et le flot (o-s) est transmis au multiplexeur (107).

Un tampon (buffer) d'activation (I-tb) à deux entrées détermine par son contenu lorsque la rafale de substitution démarre. Ce tampon I-tb envoie la séquence d'activation tc sur un comparateur associé (10222) qui reçoit sur ses autres entrées le flot sortant (o-s). Cet instant de démarrage est donné lorsque la séquence d'activation (tc) correspond au flot de caractères sortant (o-s).

Dans ce cas, la sortie (10224) du comparateur active l'incrémenteur (10223) du pointeur de lecture PL pour permettre l'envoi simultané avec chaque nouveau caractère du flot sortant d'un caractère de substitution adressé parmi les 8 caractères du tampon I-sb par le pointeur de lecture.

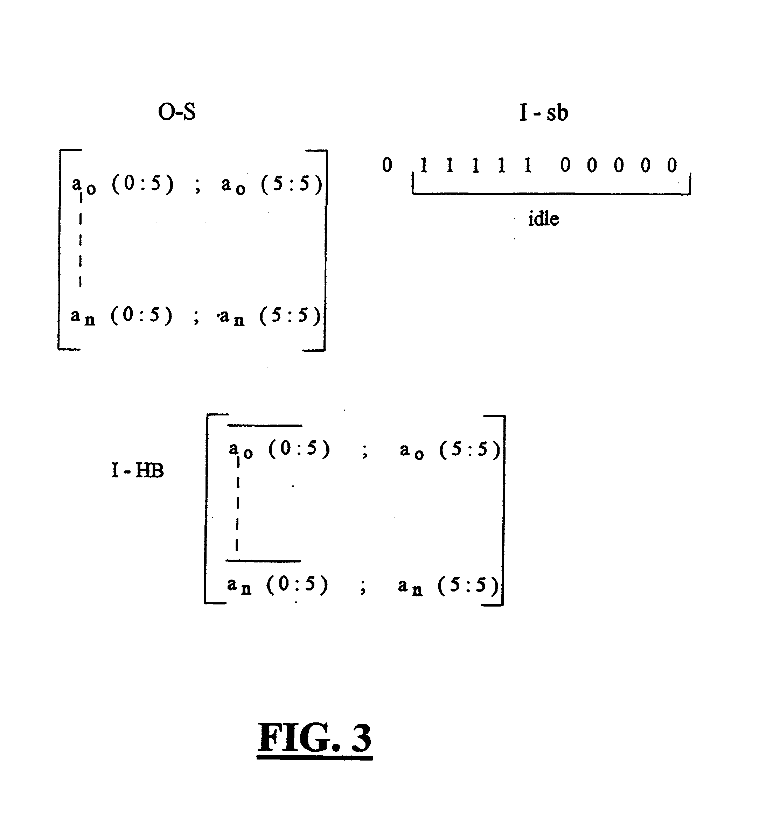

Si ces caractères sont identiques et ont une valeur indiquée à l'étiquette Isb de la figure 3, le résultat de la substitution récupérée en I-HB ou à la sortie du OU exclusif est représenté par I-HB à la figure 3.

Ce tampon (buffer) d'activation (I-tb) comporte une information (tv) qui participe à la comparaison et qui indique lorsqu'elle prend la valeur 00 qu'elle n'utilise pas la substitution. Dans le cas où l'information (tv) prend la valeur 10, la longueur de la séquence d'activation est égale à 1. Lorsque tv est égal à 11, la longueur de la séquence d'activation est de deux caractères. Ce circuit de substitution est représenté à la figure 4A.

Un pointeur d'écriture PE accessible par le microprocesseur (11a, 11c) à travers le bus CPB permet de charger dans le tampon de substitution par le bus CPB les caractères de substitution.

Ainsi, par le circuit de substitution on arrive à insérer des erreurs au moment où on le souhaite, et par le circuit (CRC) à détecter ces erreurs. Il est donc possible en rebouclant le port sur lui-même par la liaison (1090) et la commande Ict03, de détecter un fonctionnement correct des circuits de détection d'erreurs (CRC). Lorsque l'on connecte deux ports (10a, 10c) comme représenté sur la figure 2B, ces deux ports étant reliés par les circuits intégrés (1a, 1c) à des microprocesseurs respectifs (11a, 11c), il est possible de mettre en oeuvre un auto-test interne consistant à envoyer par le premier processeur (11a) une requête d'écriture de 64 bits dont le CRC correct est stocké.

Le processeur (11a) force le mécanisme d'injection d'erreurs du port (10a) et insère dans le message un caractère de contrôle CRC délibérément faux. Ce caractère est transmis par le port (10a) au port (10c) du circuit intégré (1c) esclave et lui aussi couplé à un deuxième processeur (11c). Ce port (10c) détecte une erreur de données par le calcul de CRC du message reçu qui ne correspond pas au CRC erroné inclus par le mécanisme d'insertion dans le message reçu. Cette détection d'erreurs génère l'envoi d'un message d'interruption au circuit d'émission (1a), lequel est reçu par le processeur (11a). Ce processeur (11a) vient lire dans le circuit du deuxième port (10c) la valeur CRC calculée sur les données transmises et déduit si le circuit CRC a correctement fonctionné en vérifiant que la valeur CRC mémorisée correspond à la valeur CRC reçue.

Ainsi on comprend que par ces mécanismes simples à mettre en oeuvre dans le port d'entrée sortie d'un circuit intégré, on permet la détection d'erreurs, et le contrôle du fonctionnement correct du circuit de port d'entrée sortie dans une liaison série à haut débit assurant ainsi la correction des erreurs, même si le taux d'erreurs est très faible.

Le diagnostic des erreurs s'effectue par la lecture du tampon (buffer) d'historique des occurences qui génèrent l'interruption. Cette occurrence d'erreurs génère également l'interruption de la liaison de communication vers le processeur de façon à éviter la propagation de l'erreur dans la machine.

D'autres modifications à la portée de l'homme de métier font également partie de l'invention.

## Revendications

1. Dispositif de détection d'erreurs avec auto-test intégré, sur un circuit intégré comportant une fonction de commandes de liaison série pour constituer un port (10₀) d'entrée-sortie de communication haut débit entre un bus parallèle (L2CB, C2LB) et une liaison série, ledit circuit intégré comprenant un circuit sérialiseur (109_{T}) en sortie et un circuit désérialiseur (109_{R}) en entrée, **caractérisé en ce qu'**un tampon d'insertion (1022T, I-sb) est relié à chacune de ses sorties à une fonction OU exclusif (10221) à deux entrées, et dont chaque deuxième entrée reçoit une information à transmettre (o-s) pour constituer avec l'information d'insertion provenant du tampon d'insertion, une information de substitution, un tampon supplémentaire d'activation (1022T, I-tb) permettant la comparaison de la séquence fournie en sortie du OU exclusif avec une séquence stockée dans le tampon supplémentaire d'activation (I-tb) pour valider l'émission de la séquence de substitution.

2. Dispositif de détection selon la revendication 1, **caractérisé en ce que** le tampon supplémentaire d'activation (I-tb) comporte un bit de validité (tv) et la séquence à comparer (tc).

3. Dispositif de détection selon la revendication 2, **caractérisé en ce que** la séquence à comparer (tc) peut-être un caractère nul ou message neutre (idle).

4. Dispositif selon la revendication 2, **caractérisé en ce que** la séquence à comparer (tc) peut-être soit des caractères de contrôle tels que les débuts de trame (frame), les fins de trame, des jetons, soit tous les caractères non neutres (non idle).

5. Dispositif selon une des revendications 1 à 4, **caractérisé en ce que** le port (10₀) comporte une liaison série (1090) rebouclant la sortie du sérialisateur (109_{T}) sur l'entrée du désérialisateur (109_{R}), ladite liaison série étant validée par une entrée de commandes de rebouclage fournie par un registre de contrôle.

6. Dispositif selon la revendication 5, **caractérisé en ce que** le port comporte en sortie du désérialisateur (109_{R}) un tampon d'historique (1022) stockant soit des caractères de contrôle tels que les débuts de trame (frame), les fins de trame, des jetons, soit tous les caractères non neutres (non idle).

7. Dispositif selon la revendication 6, **caractérisé en ce que** les caractères mémorisés dans le tampon d'historique (1022) sont utilisés par le circuit intégré pour déterminer la cause d'une erreur détectée ou pour vérifier que le mécanisme de détection d'erreurs est opérationnel.

8. Dispositif selon une des revendications 1 à 7, **caractérisé en ce que** le port (109) comporte au moins un tampon (TDBUF) , de données à transmettre provenant du bus parallèle, ou (RDBUF) de données à recevoir, et entre le tampon d'entrée (TDBUF) et le circuit sérialiseur de sortie, ou respectivement entre le tampon de sortie (RDBUF) et le circuit désérialiseur d'entrée, respectivement pour la partie transmission un circuit de génération de code CRC, ou pour la partie réception un circuit de contrôle de code CRC.

9. Dispositif selon la revendication 5, **caractérisé en ce que** le circuit sérialiseur et désérialiseur travaillent à 1 Giga baud, vitesse de la liaison série.

10. Dispositif selon la revendication 8, **caractérisé en ce que** le circuit de génération de CRC délivre un mot de 16 bits par utilisation d'un algorithme parallèle pour calculer le CRC après le décalage correspondant au contrôle d'un nonet.

11. Dispositif selon la revendication 8, **caractérisé en ce que** les tampons de données de transmission (TDBUF) ou de réception, (RDBUF) fonctionnent avec une horloge système spécifique ayant une fréquence correspondant à celle du bus interne du circuit intégré.

12. Dispositif selon une des revendications précédentes, **caractérisé en ce qu'**un circuit codeur 9/12 en transmission série est couplé au sérialiseur (109_{T}), et un circuit décodeur 9/12 en réception est couplé au désérialiseur (109_{R}) pour transformer un caractère normal de 9 bits, et un caractère de contrôle en code à 12 bits permettant à la réception une extraction du signal d'horloge et une composante continue nulle sur la transmission.

13. Procédé de détection d'erreurs utilisant le dispositif de la revendication 1 sur un port de communication série parallèle haut débit un circuit de génération de caractère de contrôle cyclique redondant CRC comportant un mécanisme d'injection d'erreurs, **caractérisé en ce qu'**il comporte :
une étape d'envoi au port d'une information à transmettre ;
une étape de calcul du CRC de l'information à transmettre et de mémorisation du CRC correspondant à l'information à transmettre ;
une étape de génération d'une information erronée par validation du mécanisme d'injection d'erreurs et une étape de transmission de l'information erronée à un circuit intégré équipé du même type de port ;
une étape de détection d'erreurs de données par le circuit de contrôle CRC du port de réception ;
une étape d'envoi d'un message d'interruption au circuit intégré du port de transmission ;
une étape de lecture par un microprocesseur relié au bus parallèle du port de transmission de la valeur calculée par le circuit CRC du port de réception ;
une étape de comparaison entre la valeur mémorisée et la valeur lue.

14. Procédé de détection d'erreurs, selon la revendication 13, **caractérisé en ce que** le procédé comporte une étape de rebouclage du circuit sérialiseur (109_{T}) de transmission sur le circuit désérialiseur (109_{R}) de réception du même port du circuit intégré.

15. Procédé selon la revendication 13, **caractérisé en ce que** le mécanisme d'injection d'erreurs comprend
une étape de stockage dans le tampon (buffer) insertion (I-sb) des informations d'injection à combiner avec les informations transmises pour générer l'erreur ;
une étape de chargement du tampon d'activation (I-tb) du mécanisme d'injection comportant une séquence d'un ou deux caractères ;
une étape de substitution des informations de substitution résultant de la combinaison des informations transmises avec celles d'injection dès que les informations combinées correspondent à celles du tampon d'activation (I - tb).

16. Procédé selon la revendication 15, **caractérisé en ce que** la longueur de la séquence de substitution est limitée à 8 caractères.

## Claims

1. Device for error detection with integrated self-test, on an integrated circuit having a serial link control function in order to constitute a high-speed input-output communication port (10₀) between a parallel bus (L2CB, C2LB) and a serial link, said integrated circuit comprising a serialiser circuit (109_{T}) as an output and a deserialiser circuit (109_{R}) as an input, **characterised in that** an insertion buffer (1022_{T}, I-sb) is connected at each of its outputs to a two-input exclusive OR function (10221), and each second input of which receives information (o-s) to be transmitted so as to constitute, together with the insertion information coming from the insertion buffer, substitute information, an additional activation buffer (1022_{T}, I-tb) allowing the comparison of the sequence supplied as an output from the exclusive OR with a sequence stored in the additional activation buffer (I-tb) in order to validate the transmission of the substitute sequence.

2. Detection device according to Claim 1, **characterised in that** the additional activation buffer (I-tb) comprises a validity bit (tv) and the sequence to be compared (tc).

3. Detection device according to Claim 2, **characterised in that** the sequence to be compared (tc) can be a blank character or idle message.

4. Device according to Claim 2, **characterised in that** the sequence to be compared (tc) can be either check characters such as frame starts, frame ends, tokens, or else all the non-idle characters.

5. Device according to one of Claims 1 to 4, **characterised in that** the port 10₀ comprises a serial link (1090) looping back the output of the serialiser (109_{T}) to the input of the deserialiser (109_{R}), said serial link being validated by a loop-back control input provided by a check register.

6. Device according to Claim 5, **characterised in that** the port comprises as an output from the deserialiser (109_{T}) a history buffer (1022) storing either check characters such as frame starts, frame ends, tokens, or else all the non-idle characters.

7. Device according to Claim 6, **characterised in that** the characters stored in the history buffer (1022) are used by the integrated circuit in order to determine the cause of an error detected or to check that the error detection mechanism is operational.

8. Device according to one of Claims 1 to7, **characterised in that** the port (109) comprises at least one buffer (TDBUF), of data to be transmitted coming from the parallel bus, or (RDBUF) of data to be received, and between the input buffer (TDBUF) and the output serialiser circuit or respectively between the output buffer (RDBUF) and the input deserialiser circuit, respectively a CRC code generation circuit for the transmission part, or a CRC code check circuit for the reception part.

9. Device according to Claim 5, **characterised in that** the serialiser and deserialiser circuit work at 1 Gigabaud, the speed of the serial link.

10. Device according to Claim 8, **characterised in that** the CRC generation circuit supplies a 16-bit word by using a parallel algorithm in order to calculate the CRC after the shift corresponding to checking of a nine-bit byte.

11. Device according to Claim 8, **characterised in that** the transmission (TDBUF) or reception (RDBUF) data buffers work with a specific system clock having a frequency corresponding to that of the internal bus of the integrated circuit.

12. Device according to one of the preceding claims, **characterised in that** a 9/12 encoding circuit in serial transmission is coupled to the serialiser (109_{T}), and a 9/12 decoding circuit in reception is coupled to the deserialiser (109_{R}) in order to transform a normal 9-bit character, and a check character into 12-bit code permitting, on reception, extraction of the clock signal and a blank continuous component on transmission.

13. Method for error detection using the device of Claim 1 on a high-speed serial-parallel communication port and a CRC cyclic redundancy check character generation circuit comprising an error injection mechanism, **characterised in that** it comprises:
a step of sending to the port information to be transmitted;
a step of calculating the CRC of the information to be transmitted and of
storing the CRC corresponding to the information to be transmitted;
a step of generating erroneous information by validating the error injection mechanism and a step of transmitting the erroneous
information to an integrated circuit equipped with the same type of port;
a step of detecting data errors by the CRC check circuit of the reception port;
a step of sending an interrupt message to the integrated circuit of the transmission port;
a step of reading by a microprocessor connected to the parallel bus of the transmission port the value calculated by the CRC circuit of the reception port;
a step of comparing the value stored and the value read.

14. Error detection method, according to Claim 13, **characterised in that** the method comprises a step of looping back the serialiser transmission circuit (109_{T}) to the deserialiser reception circuit (109_{R}) of the same port of the integrated circuit.

15. Method according to Claim 13, **characterised in that** the error injection mechanism comprises:
a step of storing, in the insertion buffer (I-sb), injection information to be combined with the information transmitted in order to generate the error;
a step of loading the activation buffer (I-tb) of the injection mechanism having a sequence of one or two characters;
a step of substituting the substitution information resulting from the combination of the information transmitted with the injection information as soon as the combined information corresponds to that in the activation buffer (I-tb).

16. Method according to Claim 15, **characterised in that** the length of the substitution sequence is limited to 8 characters.

## Patentansprüche

1. Vorrichtung für die Erfassung von Fehlern mit integriertem Selbsttest auf einer integrierten Schaltung, die eine Funktion für Befehle für eine serielle Verbindung umfaßt, um einen Eingangs/Ausgangs-Port (10₀) für eine Kommunikation mit hohem Durchsatz zwischen einem parallelen Bus (L2CB, C2LB) und einer seriellen Verbindung zu bilden, wobei die integrierte Schaltung eine Ausgangs-Serialisierungsschaltung (109_{T}) und eine Eingangs-Deserialisierungsschaltung (109_{R}) umfaßt, **dadurch gekennzeichnet, daß** ein Einfügungspuffer (1022T, I-sb) an jedem ihrer Ausgänge mit einer Exklusiv-ODER-Funktion (10221) mit zwei Eingängen verbunden ist, wovon jeder zweite Eingang zu übertragende Informationen (o-s) empfängt, um mit Einfügungsinformationen, die vom Einfügungspufferspeicher stammen, Substitutionsinformationen zu bilden, wobei ein zusätzlicher Aktivierungspuffer (1022T, I-tb) den Vergleich der am Ausgang des Exklusiv-ODER gelieferten Folge mit einer in dem zusätzlichen Aktivierungspufferspeicher (I-tb) gespeicherten Folge ermöglicht, um das Aussenden der Substitutionsfolge zu validieren.

2. Erfassungsvorrichtung nach Anspruch 1, **dadurch gekennzeichnet, daß** der zusätzliche Aktivierungspufferspeicher (I-tb) ein Gültigkeitsbit (tv) und die zu vergleichende Folge (tc) enthält.

3. Erfassungsvorrichtung nach Anspruch 2, **dadurch gekennzeichnet, daß** die zu vergleichende Folge (tc) ein Null-Zeichen oder eine neutrale Nachricht (idle) sein kann.

4. Vorrichtung nach Anspruch 2, **dadurch gekennzeichnet, daß** die zu vergleichende Folge (tc) entweder Steuerzeichen wie etwa die Rahmenanfänge (frame), die Rahmenenden, Jetons oder alle nicht neutralen Zeichen (non idle) umfassen kann.

5. Vorrichtung nach einem der Ansprüche 1 bis 4, **dadurch gekennzeichnet, daß** der Port (10₀) eine serielle Verbindung (1090) umfaßt, die den Ausgang des Serialisierers (109_{T}) zum Eingang des Deserialisierers (109_{R}) zurückschleift, wobei die serielle Verbindung durch einen Rückschleifbefehlseingang, der von einem Steuerregister versorgt wird, validiert wird.

6. Vorrichtung nach Anspruch 5, **dadurch gekennzeichnet, daß** der Port am Ausgang des Deserialisierers (109_{R}) einen Historien-Pufferspeicher (1022) umfaßt, der entweder Steuerzeichen wie etwa die Rahmenanfänge (frame), die Rahmenenden, Jetons oder alle nicht neutralen Zeichen (non idle) speichert.

7. Vorrichtung nach Anspruch 6, **dadurch gekennzeichnet, daß** die in dem Historienpufferspeicher (1022) gespeicherten Zeichen von der integrierten Schaltung verwendet werden, um die Ursache eines erfaßten Fehlers zu bestimmen oder um zu verifizieren, daß der Fehlererfassungsmechanismus in Betrieb ist.

8. Vorrichtung nach einem der Ansprüche 1 bis 7, **dadurch gekennzeichnet, daß** der Port (109) wenigstens einen Pufferspeicher (TDBUF) für zu sendende Daten, die vom parallelen Bus stammen, oder einen Pufferspeicher (RDBUF) für zu empfangende Daten umfaßt und zwischen dem Eingangspufferspeicher (TDBUF) und der Ausgangsserialisiererschaltung oder zwischen dem Ausgangspufferspeicher (RDBUF) und der Eingangsdeserialisiererschaltung für den Sendeabschnitt eine Codeerzeugungsschaltung (CRC) bzw. für den Empfangsabschnitt eine Codesteuerschaltung (CRC) umfaßt.

9. Vorrichtung nach Anspruch 5, **dadurch gekennzeichnet, daß** die Serialisiererschaltung und die Deserialisiererschaltung mit 1 Gigabaud, der Geschwindigkeit der seriellen Verbindung, arbeiten.

10. Vorrichtung nach Anspruch 8, **dadurch gekennzeichnet, daß** die CRC-Erzeugungsschaltung unter Verwendung eines parallelen Algorithmes ein Wort mit 16 Bit liefert, um den CRC nach der Verschiebung, die der Steuerung eines Nonetts entspricht, zu berechnen.

11. Vorrichtung nach Anspruch 8, **dadurch gekennzeichnet, daß** der Pufferspeicher (TDBUF) für Sendedaten oder der Pufferspeicher (RDBUF) für Empfangsdaten mit einem bestimmten Systemtakt arbeiten, der eine Frequenz besitzt, die jener des internen Busses der integrierten Schaltung entspricht.

12. Vorrichtung nach einem der vorhergehenden Ansprüche, **dadurch gekennzeichnet, daß** eine 9/12-Codierungsschaltung für serielles Senden mit dem Serialisierer (109_{T}) gekoppelt ist und daß eine 9/12-Decodierungsschaltung für den Empfang mit dem Deserialisierer (109_{R}) gekoppelt ist, um ein normales Zeichen aus neun Bit und ein Steuerzeichen im Code mit 12 Bit zu transformieren, was beim Empfang eine Extraktion des Taktsignals und einer kontinuierlichen Null-Komponente beim Senden ermöglicht.

13. Verfahren für die Erfassung von Fehlern, das an einem Seriell-Parallel-Kommunikationsport mit hohem Durchsatz die Vorrichtung nach Anspruch 1 verwendet und ferner eine Schaltung für die Erzeugung von Steuerzeichen CRC mit zyklischer Redundanz, die einen Fehlereinleitungsmechanismus enthält, verwendet, **dadurch gekennzeichnet, daß** es umfaßt:
einen Schritt bei, dem zu sendende Informationen an den Port geschickt werden;
einen Schritt, bei dem die CRC der zu sendenden Informationen berechnet und die CRC, die den zu sendenden Informationen entsprechen, gespeichert werden;
einen Schritt, bei dem Informationen, die durch Validierung des Fehlereinleitungsmechanismus fehlerhaft gemacht werden, erzeugt werden, und einen Schritt, bei dem die fehlerhaft gemachten Informationen zu einer integrierten Schaltung, die mit demselben Port-Typ ausgerüstet ist, gesendet werden;
einen Schritt, bei dem Datenfehler von der CRC-Steuerschaltung des Empfangs-Ports erfaßt werden;
einen Schritt, bei dem eine Unterbrechungsnachricht zur integrierten Schaltung des Sende-Ports gesendet wird;
einen Schritt, bei dem durch einen mit dem parallelen Bus des Sende-Ports verbundenen Mikroprozessors der von der CRC-Schaltung des Empfangs-Ports berechnete Wert gelesen wird; und
einen Schritt, bei dem der gespeicherte Wert mit dem gelesenen Wert verglichen wird.

14. Fehlererfassungsverfahren nach Anspruch 13, **dadurch gekennzeichnet, daß** das Verfahren einen Schritt umfaßt, bei dem die Sende-Serialisiererschaltung (109_{T}) zur Empfangs-Deserialisiererschaltung (109_{R}) desselben Ports der integrierten Schaltung zurückgeschleift wird.

15. Verfahren nach Anspruch 13, **dadurch gekennzeichnet, daß** der Fehlereinleitungsmechanismus umfaßt:
einen Schritt, bei dem Einleitungsinformationen, die mit den gesendeten Informationen zu kombinieren sind, um den Fehler zu erzeugen, in dem Einfügungspuffer (I-sb) gespeichert werden;
einen Schritt, bei dem der Aktivierungspuffer (I-tb) des Einleitungsmechanismus, der eine Folge aus einem oder aus zwei Zeichen enthält, geladen wird;
einen Schritt, bei dem Substitutionsinformationen, die sich aus der Kombination der gesendeten Informationen mit den eingeleiteten Informationen ergeben, substituiert werden, sobald die kombinierten Informationen jenen des Aktivierungspuffers (I-tb) entsprechen.

16. Verfahren nach Anspruch 15, **dadurch gekennzeichnet, daß** die Länge der Substitutionsfolge auf 8 Zeichen begrenzt ist.
